# EUROPEAN PATENT APPLICATION

(11) **EP 1 826 520 A2**
(43) Date of publication of application: **29.08.2007**
(21) Application number: 07102651.2
(22) Date of filing: 19.02.2007
(51) Int. Cl.: F28F 1/02, F28F 1/04, F28F 13/06, F24H 8/00

(54) **Thermal exchange element and heat exchanger comprising said element**

(30) Priority: 28.02.2006 IT BG20060008
(71) Applicant: G20 Engineering S.r.l., 29013 Carpaneto, PC (IT)
(72) Inventor: Rapaccioli, Marco, I-29100, Piacenza (IT)
(74) Representative: Giavarini, Francesco

(57) **Abstract**

A thermal exchange element to be used for the production of heat exchangers for heating plants such as, for example, condensing boilers for domestic or industrial use. The thermal exchange element (1) according to the invention comprises a longitudinal sleeve (8) provided with an outer surface (8A) suitable for being skimmed by a heat carrier fluid. The sleeve (8) comprises an inner surface (8B) which defines a through cavity suitable for being crossed by a liquid to be heated. The element furthermore comprises a flow separator (10) positioned inside said sleeve (8) so as to define a plurality of circulation channels (5A, 5B, 5C) inside said cavity. The flow separator (10) comprises a plurality of raised surfaces (11) arranged in contact with the inner surface (8B) of the sleeve (8) to obtain the mechanical seal between two mutually adjacent channels.

## Description

The present invention relates to a thermal exchange element to be used for the production of heat exchangers for heating plants such as, for example, condensing boilers for domestic or industrial use. The invention also relates to a heat exchanger comprising said element.

As is known, heat exchangers are devices that permit the transfer of a certain amount of thermal energy from a warmer to a colder fluid without contact between the two fluids. To chemically separate the two fluids, avoiding contact, thermal exchange elements are traditionally used consisting of metal tubes. The colder fluid, for example water to be heated, crosses the thermal exchange elements internally, while the heat carrying fluid, consisting for example of the products deriving from combustion, skims the outer surface of the exchange elements. Transfer of the thermal energy from the heat carrier fluid to the fluid to be heated is based on conductive and convective processes which are influenced by the physical characteristics of the material positioned between the fluids and the relative temperatures of the fluids themselves.

The different types of heat exchangers used in the heating technology sector include those used in condensing boilers which, as is known, exploit both the heat that develops as a result of combustion and the latent condensation heat contained in the combustion products and which, in traditional boilers, would be lost through the chimney without being exploited.

An example of heat exchangers used in a condensing boiler is illustrated in the patent application ITPR2001A000024. In this solution the heat exchanger comprises a battery of tubes crossed internally by the water and externally skimmed by flue gases at high temperature generated by the combustion. The flue gases release heat, and then condense in the lower portion of the exchanger, after which they are expelled via a chimney. These tubes are arranged substantially in cascade fashion and are mutually connected at their ends so as to define a pre-set path for the water, designed to permit a gradual increase in temperature. The tubes are externally finned to increment the thermal exchange surface and to increase the turbulence of the flue gases in order to ensure that the latter adhere to the tubes to improve the thermal exchange process.

From the above it can be seen that the heat exchanger in question, like many others traditionally used, has some drawbacks connected with its underlying construction principle. In fact, the overall efficiency of the exchanger depends to a large extent on the number of tubes used or the number of heating operations which the water undergoes during its passage into the region crossed by the flue gases. To obtain good efficiency, in fact, it is necessary to provide a considerable number of tubes, consequently increasing the number of water heating operations. This aspect, however, leads to a considerable increase in the dimensions of the exchanger and the overall volume and therefore an increase in overall production costs.

On the basis of these considerations the main aim of the present invention is to provide a thermal exchange element for the production of heat exchangers which overcomes the above-mentioned drawbacks.

In the context of this aim, one object of the present invention is that of providing a thermal exchange element which permits an efficient transfer of thermal energy between a heat carrier fluid and a liquid to be heated.

A further object of the present invention is to provide a thermal exchange element which achieves a higher efficiency than that of the heat exchange elements traditionally used in the sector.

A further object of the present invention is to provide a thermal exchange element that permits the production of a heat exchanger with compact dimensions and limited volume.

A further object of the present invention is to provide a thermal exchange element that is dependable and easy to produce at a competitive price.

This aim, in addition to other aims that will be illustrated in further detail below, is achieved via a thermal exchange element for heat exchangers comprising a longitudinal sleeve provided with an outer surface suitable for being skimmed by a carrier fluid, and an inner surface defining a cavity suitable for being crossed by a liquid to be heated. The thermal exchange element is characterised in that it comprises a flow separator contained inside the sleeve so as to define a plurality of circulation channels. The flow separator comprises a plurality of raised surfaces arranged in contact with the inner surface of the sleeve to guarantee the mechanical seal between two circulation channels.

The plurality of passages defined inside the cavity by the flow separator permits, for example, exploitation of said thermal exchange element to provide a plurality of passages for the water in the region crossed by the heat carrier fluid. Substantially the function traditionally performed by a plurality of separate elements can be performed by a single thermal exchange element with obvious advantages in terms of practicality, overall dimensions and cost.

Further characteristics and advantages of the invention will become apparent in the course of the description of preferred but not exclusive embodiments of the thermal exchange element according to the invention illustrated by way of non-limiting example in the accompanying drawings in which:
- figure 1 is a perspective view of a first embodiment of a thermal exchange element according to the present invention;
- figures 2 and 2A are a lateral view and a section view respectively according to the line II-II of the thermal exchange element of figure 1;
- figure 3 is a perspective view of a second embodiment of a thermal exchange element according to the present invention;
- figures 4 and 4A are a lateral view and a section view respectively along the line IV-IV of the thermal exchange element of figure 3;
- figures 5 and 5A are a perspective view and a cross section view respectively relative to a third embodiment of a thermal exchange element according to the invention;
- figures 6 and 6A are a perspective view and a cross section view respectively relative to a fourth embodiment of a thermal exchange element according to the invention;
- figures 7 and 7A are a perspective view and a cross section view respectively relative to a fifth embodiment of a thermal exchange element according to the invention;
- figure 8 is a first perspective view of an embodiment of a heat exchanger provided with a plurality of thermal exchange elements according to the present invention;
- figure 9 is a lateral view of the heat exchanger of figure 8;
- figure 10 is a second perspective view of the heat exchanger of figure 8;
- figure 11 is a frontal view of the heat exchanger illustrated in figures 8 and 9;
- figure 12 is a section view along the line X-X of figure 11;
- figure 13 is a perspective view of a condensing boiler comprising a heat exchanger provided with a plurality of thermal exchange elements according to the present invention;
- figure 14 is a section view of the boiler of figure 13;
- figure 15 is a lateral view of the boiler of figure 13.

With reference to the figures cited, the thermal exchange element according to the present invention comprises a longitudinal sleeve 8 provided with an outer surface 8A suitable for being skimmed by a heat carrier fluid. Said sleeve 8 furthermore comprises an inner surface 8B which defines a longitudinal cavity suitable for being crossed by a liquid to be heated. If the thermal exchange element 1 is used, for example, in a heat exchanger 2 provided in a condensing boiler 3, the heat carrier fluid consists of the combustion products generated in the boiler itself, while the liquid to be heated will consist of water intended for domestic or industrial use. The sleeve 8 prevents mixing of the two fluids, at the same time constituting the interface for the thermal transmission processes. For this reason it is made of heat conducting material such as steel or other metal alloys with high conduction, for example aluminium alloys.

The thermal exchange element 1 is characterised in that it comprises a flow separator 10 positioned inside the sleeve 8 to define a plurality of circulation channels 5A, 5B, 5C. In a possible operating configuration, said channels 5A, 5B, 5C can be mutually connected at their ends to allow said thermal exchange element 1 to heat the liquid in several stages. The flow separator 10 furthermore comprises a plurality of raised surfaces 11 arranged in contact with the inner surface 8B to provide a mechanical seal between two mutually adjacent channels 5A, 5B.

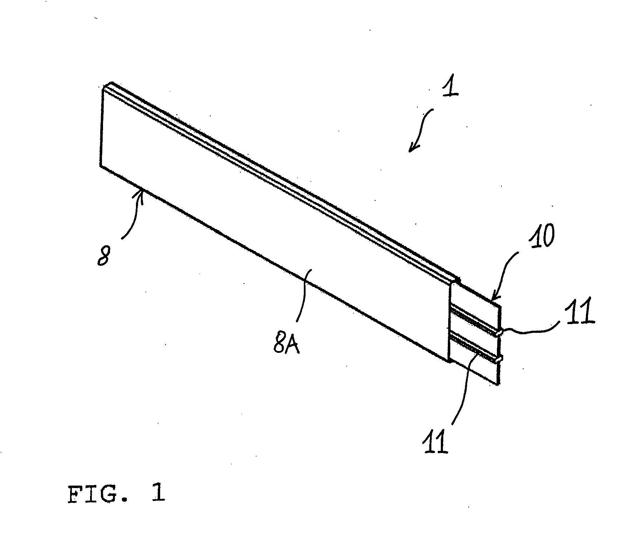

Figure 1 illustrates a first embodiment of the thermal exchange element 1 according to the invention in which the sleeve 8 has a rectangular cross section comprising a flow separator 10 having a structure such as to define six channels for circulation of the liquid. In particular the structure of the separator 10 is such that the inner surface 8B of the sleeve 8 defines at least one wall of each of said channels 5A, 5B, 5C. The possibility of the structure of the flow separator 10 defining a different number of circulation channels with respect to the one indicated and the possibility of the structure of the separator 10 defining in itself a circulation channel for the liquid, i.e. without the help of the inner surface 8B, fall within the scope of the inventive concept.

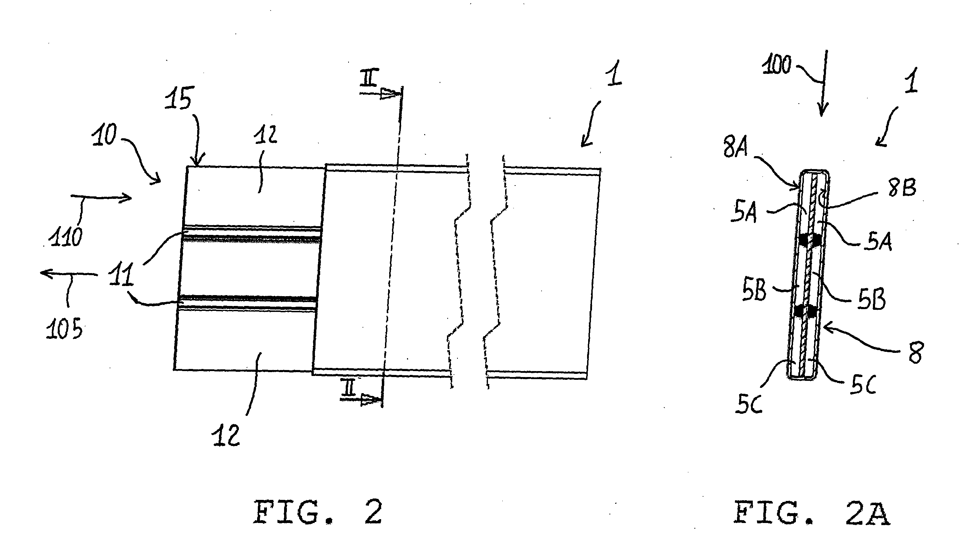

Figures 2 and 2A are respectively a lateral view and a section view of the exchange element 1 illustrated in figure 1 and provide a better illustration of the structure of the flow separator 10 which comprises partition surfaces 12 developing longitudinally throughout the length of the element 1. As illustrated, said partition surfaces 12 advantageously consist of longitudinal regions of the same plate 15 delimited longitudinally by the raised surfaces 11 indicated above. The latter develop throughout the length of the plate 15, or of the sleeve 8, in order to provide the mechanical seal between two mutually adjacent channels 5A, 5B preferably designed to be crossed by the liquid in opposite flow directions. The raised surfaces 11 can be made of rubber, for example, while the plate 15 can be made of steel. In this case the rubber surfaces can be pressed longitudinally on the plate 15 by means of known industrial processes.

Obviously the possibility of producing the flow separator 10 and the relative raised surfaces 11 in materials alternative to those specified above, but functionally equivalent, fall within the scope of the invention. The flow separator 10, for example, could be made entirely of plastic.

From the above, it can be deduced that the flow separator 10 can be advantageously produced independently of the longitudinal sleeve 8 and then positioned in the same. This aspect is particularly advantageous as the sleeve 8, with a defined cross section, can house, for example, flow separators 10 having a different structure according to the functional performance required of the heat exchanger 2 served by the thermal exchange element 1.

With reference again to figure 2A, the volume of the cavity of the sleeve 8 can be considered divided into three pairs of circulation channels 5A, 5B, 5C each consisting of two channels mutually adjacent with respect to a direction substantially square to the direction of origin of the carrier fluid. In said regard it has been seen that the best performance of the thermal exchange element 1 is achieved when the carrier fluid skims the outer surface 8A of the sleeve 8 in a direction 100 substantially square to the one in which the sleeve develops.

The thermal exchange between the carrier fluid and the liquid is a direct function of the temperature gradient existing between the same and the thermal conduction properties of the material positioned in-between. The temperature of the carrier fluid and therefore its thermal energy decrease as the thermal exchange develops. This means that the energy content of the carrier fluid during the exchange with a first pair of channels 5A will be greater than the one possessed by the fluid itself during the subsequent thermal exchange with a second pair of channels 5B. It has been seen that the maximum efficiency of the thermal exchange element 1 is achieved by maintaining the same temperature gradient between the carrier fluid and the liquid every time the liquid passes inside the cavity of the exchange element 1. In the case illustrated, this condition can be obtained by ensuring that the liquid crosses first the second pair of channels 5B, for example in a first flow direction 105, and subsequently the first pair of channels 5A, in a direction 110 opposite to the preceding one. In order to permit this type of circulation, the raised surfaces 11 between the first pair of channels 5A and second pair of channels 5B provide a seal that can be defined as hermetic, i.e. which prevents the liquid from transferring at any point from one pair of channels to the other.

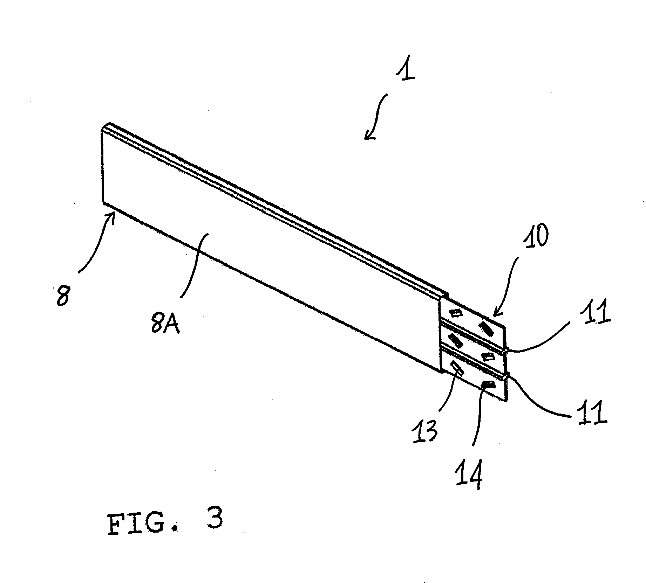

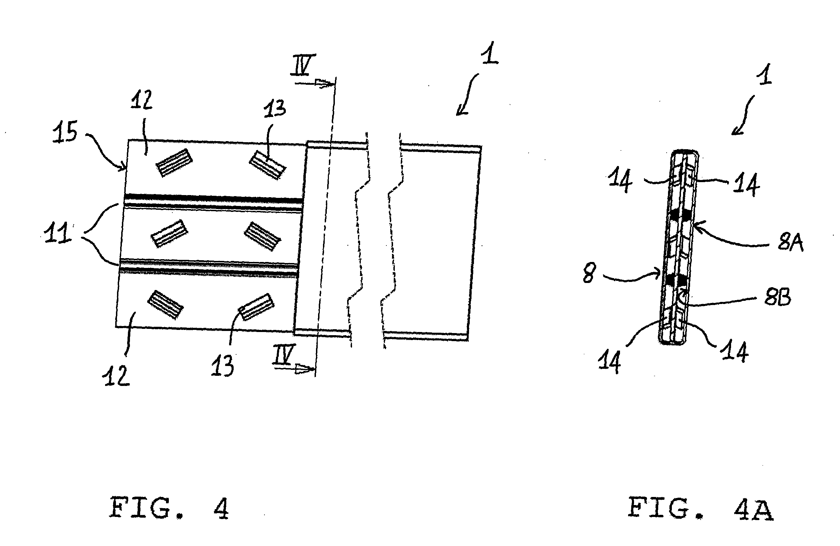

Figures 3, 4 and 4A relate to a second embodiment of the thermal exchange element 1 according to the invention which differs from the preceding one as the partition surfaces 12 are provided with passages 13 to permit communication between two mutually adjacent channels 5A, 5B, 5C designed to be crossed by the liquid in a common flow direction.

The partition walls 12 are preferably provided with turbulators 14 positioned near the passages 13 to generate turbulence of the liquid inside the two channels 5A communicating by means of the passages. The technical solutions described above create turbulence in the liquid which advantageously erodes the boundary layer generated at the walls of each circulation channel 5A, 5B, 5C according to known principles of fluid mechanics. It has been seen that reduction of the thickness of the boundary layer improves the thermal exchange between the two fluids and, all other operating conditions being equal, increases the overall efficiency of the thermal exchange element 1.

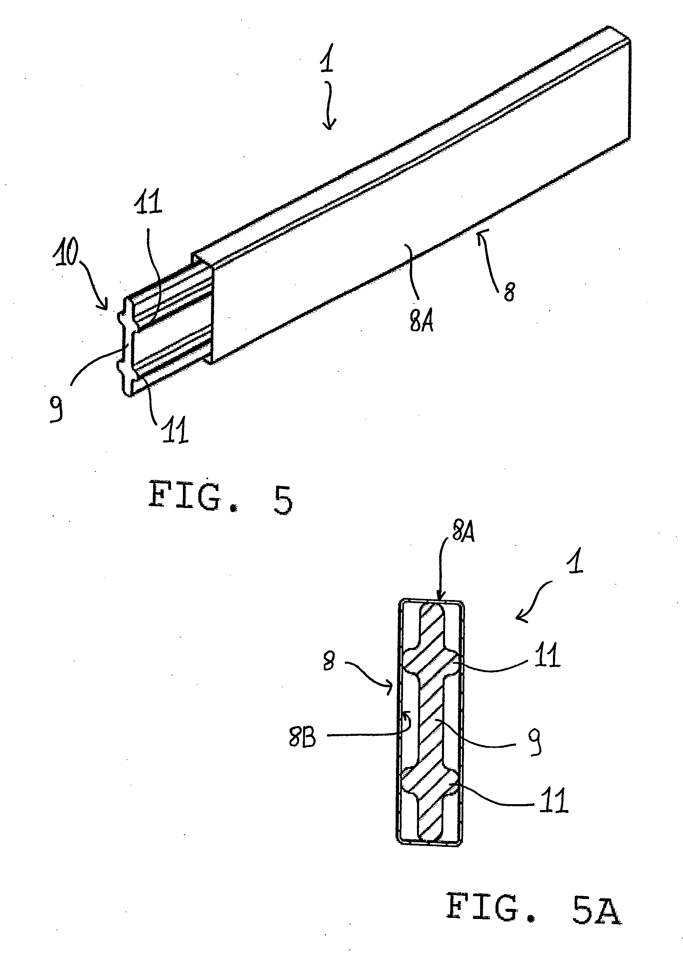

Figures 5, 5A, 6, 6A, 7 and 7A illustrate possible embodiments of the thermal exchange element 1 according to the present invention. In particular the solution illustrated in figures 5 and 5A is distinguished by the fact that the structure of the flow separator 10 comprises a central core 9 from which the raised surfaces 11 develop. The central core 9 of the flow separator 10 has dimensions such that the overall working section for passage of the liquid inside the element 1 is at least half that measured without the flow separator 10. Said solution is motivated by the fact that the thermal exchange improves, the liquid flow being equal, by reducing the cross section of the individual channels or increasing the velocity of the liquid inside the channels. Said operating conditions reduce the negative effects of the boundary layer, improving the thermal exchange by convection inside each channel.

The high thermal efficiency of the thermal exchange element 1, achieved via this particular configuration of the flow separator 10, permits use of the circulation channels 5A, 5B and 5C only once, i.e. without the liquid having to pass several times inside the cavity of the thermal exchange element. In this operating configuration the main purpose of the raised surfaces 11 is to provide a mechanical interface for positioning of the flow separator 10 inside the sleeve 8. In other words, in this configuration the raised surfaces 11 do not necessarily have to provide a hermetic seal.

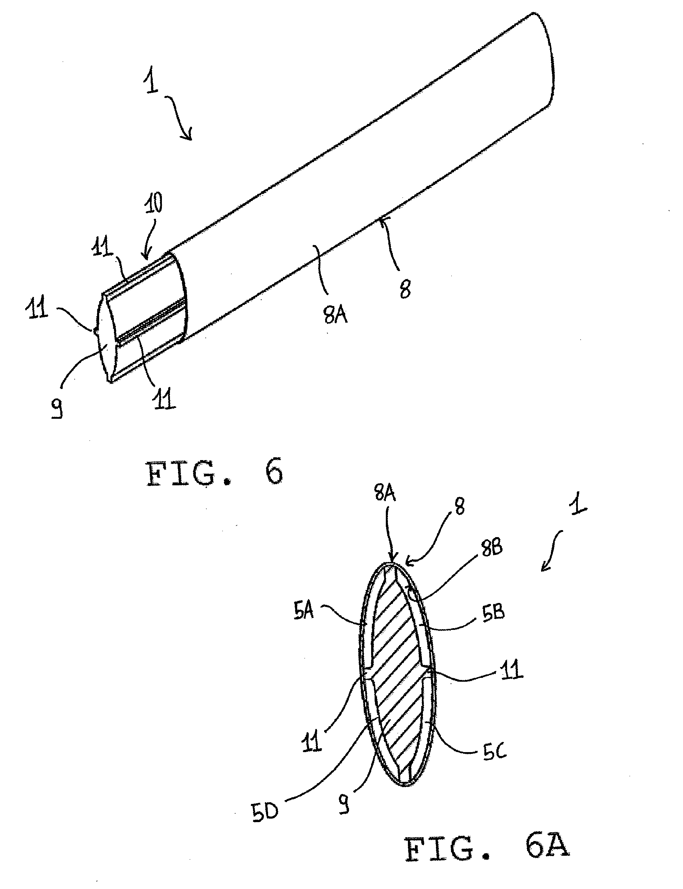

Figures 6 and 6A illustrate a further possible embodiment of the element 1 which, with respect to the solution of figures 5 and 5A, is distinguished by the fact that the sleeve 8 and the central core 9 of the flow separator 10 have a cross section with a substantially elliptical shape. As is evident from the figures, the raised surfaces 11 develop from the central core 9 so as to define four channels 5A, 5B, 5C, 5D with very small section in order to achieve the purposes described above.

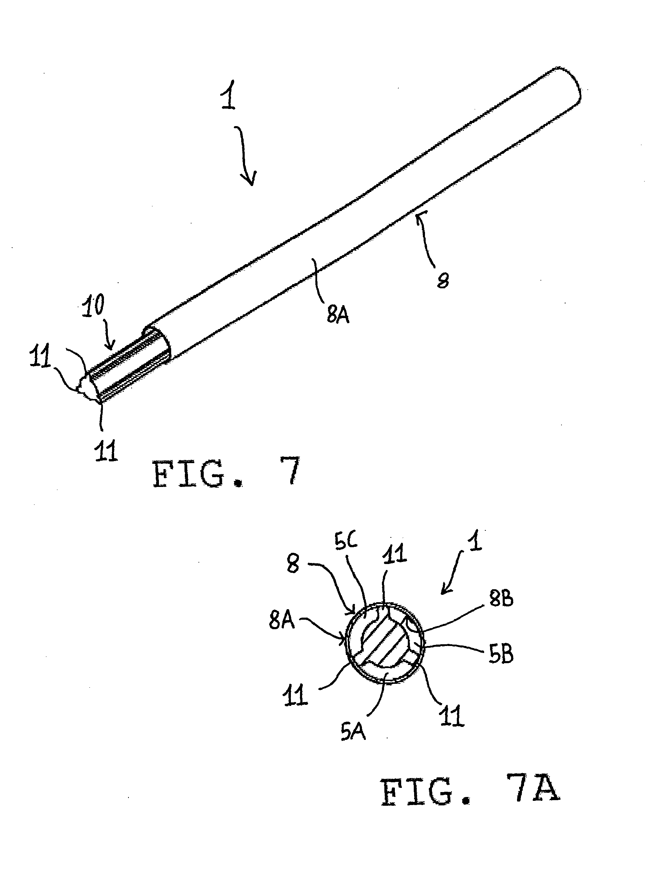

Figures 7 and 7A illustrate a further embodiment of the thermal exchange element according to the invention which is distinguished by the fact that the cross section of the sleeve 8 and of the central core 9 of the flow separator 10 have a circular section. In particular the separator 10 is provided with three raised surfaces 11 which contact the inner surface 8B of the sleeve 8 so as to define three channels 5A, 5B, 5C with reduced dimensions for passage of the liquid.

The possibility of producing exchange elements distinguished by cross sections having different forms with respect to those indicated and/or by a different number of passages obviously falls within the inventive concept. In the same way also the central core 9 of the flow separators 10 can take various forms according to the requirements for use of the exchangers.

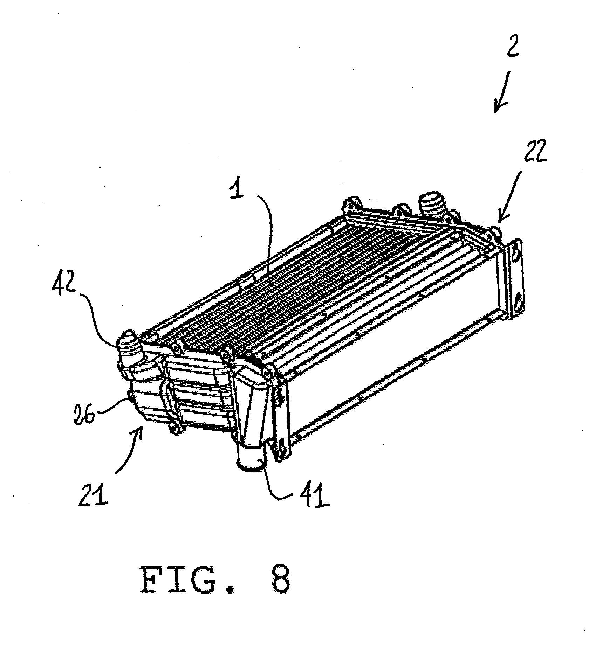

The present invention also relates to a heat exchanger 2 to be used preferably as a primary exchanger in the production of condensing boilers 3. A possible embodiment of the heat exchanger is illustrated in figures 8 to 12.

The heat exchanger 2 according to the invention is characterised in that it comprises a first head 21 and a second head 22 with a battery of thermal exchange elements 1 according to the present invention positioned in-between. The two heads 21 and 22 are provided with connection chambers 31A, 31B, 31C, 32A, 32B arranged to operatively connect the thermal exchange elements 1 in order to define a water circulation path.

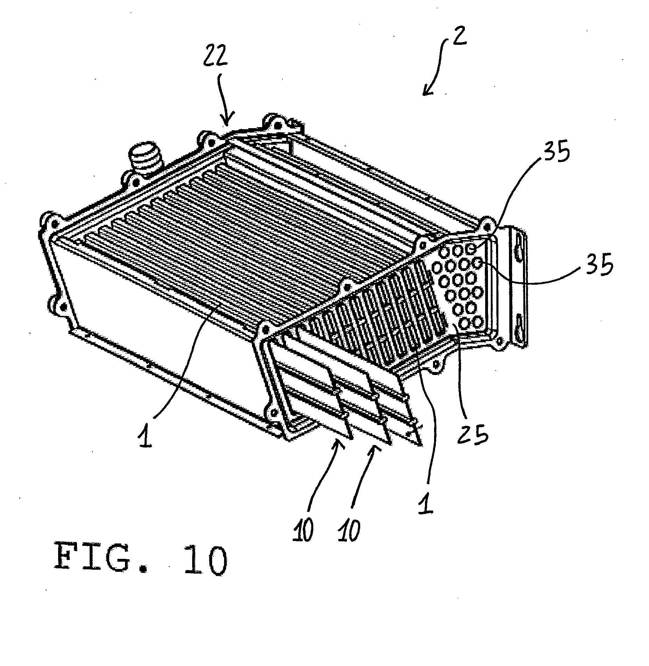

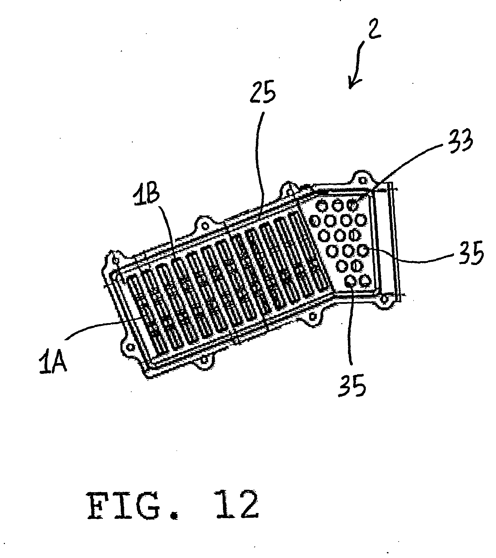

With reference in particular to figures 8 and 10, each of the two heads 21 and 22 comprises a flange 25 for anchoring the exchange elements 1 at their ends in order to maintain the thermal exchange elements 1 mutually separate at pre-set distances. Each head 21 and 22 is completed by a cover 26 hermetically connected to a respective flange 25. Each cover 26 comprises a shaped surface designed to cooperate with the respective flange 25 to define the above-mentioned connection chambers 31A, 31B, 31C, 32A, 32B suitable for allowing the liquid coming out of a first thermal exchange element 1A to re-enter other circulation channels of the same element or of a second element 1B of the exchanger 2 (see fig. 12).

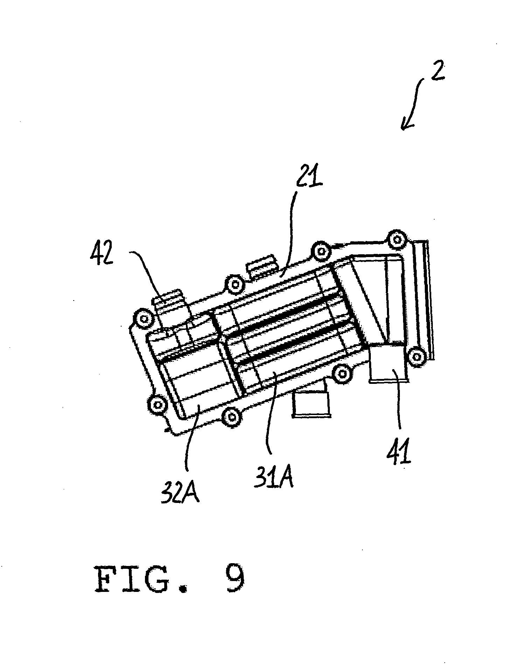

With reference to figure 9, at least one of the two heads 21 and 22 comprises a first connection chamber 32A, 32B for the hydraulic connection of a first channel 5A to a second channel 5C belonging to the same thermal exchange element 1A. At least one of said heads 21 and 22 furthermore comprises a second connection chamber 31A, 31B, 31C for the hydraulic connection of one or more channels of a first thermal exchange element 1A to one or more channels of a second thermal exchange element 1B. The expression "hydraulic connection" denotes a connection between two or more channels such as to permit passage of the liquid between the channels.

The configuration of the heads 21 and 22 and in particular of the relative covers 26 depends on the number of thermal exchange elements 1 anchored between the flanges 25 and the number of circulation channels 5A, 5B, 5C defined inside each element 1. With reference to figures 10 and 12, for example, the thermal exchange elements 1 are of the type illustrated in the figures from 1 to 3A inclusive of three pairs of channels 5A, 5B, 5C for circulation of the liquid. The thermal exchange elements 1 could have a different form such as the one indicated in figures 5 to 7A or other forms not described but falling within the inventive concept.

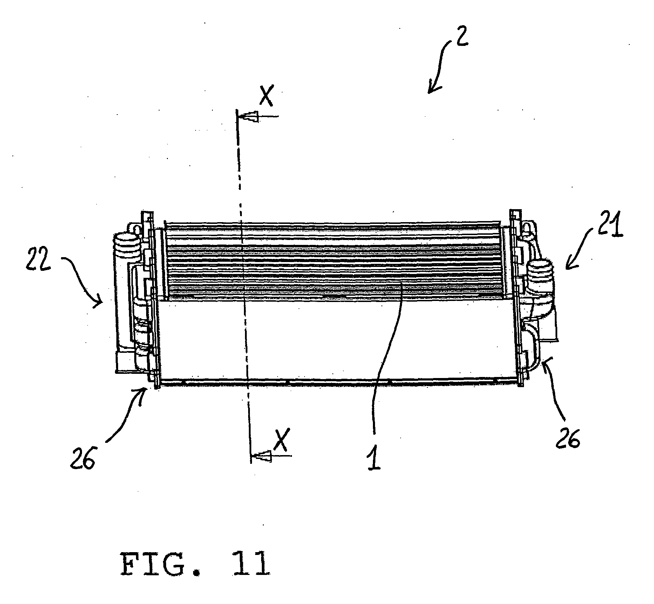

Again with reference to figures 10 and 12, according to a preferred embodiment of the invention, each of the flanges 25 comprises an end portion 33 arranged to permit the positioning of a plurality of tubes 35 designed to pre-heat the liquid before the latter begins to circulate in the thermal exchange elements 1. Pre-heating of the liquid can be advantageously performed recovering the thermal energy still contained in the heat carrier fluid at the end of the main energy exchange with the thermal exchange elements 1. Substantially, the plurality of tubes 35 operate like a traditional "heat recovery" exchanger, while the battery of thermal exchange elements according to the invention operates like a traditional "primary" exchanger. The combination of the two exchangers substantially defines a "heat exchanger unit" which can be used for the production of extremely compact and therefore easy-to-use heat engines, as can be deduced by observing, for example, figures 8 and 11.

Figure 9 is a lateral view of the heat exchanger 2 according to the invention which shows in detail the configuration of one of the two heads and in particular of the one which will hereinafter be referred to as first head 21 to better illustrate other original aspects of the present invention. As is evident from the figure, said first head 21 comprises a supply duct 41 for introduction of the liquid to be heated inside the hydraulic path defined by the heads 21 and 22 and by the thermal exchange elements 1. The first head 21 furthermore comprises a duct for evacuation of the liquid 42 from the heat exchanger 2.

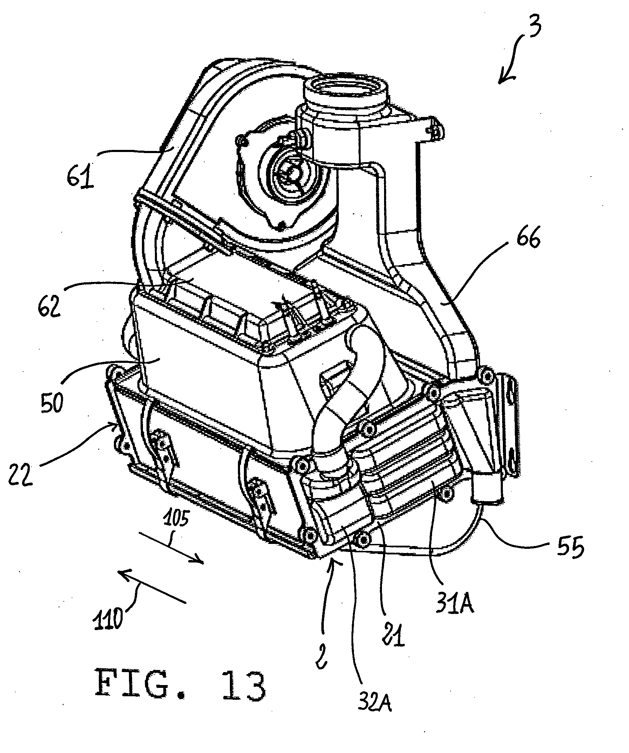

Figures 13, 14 and 15 relate to a condensing boiler 3 comprising the heat exchanger according to the present invention. The boiler 3 comprises a fan 61 which, via its underpressure, creates a mixture of combustible gas and air which is sent to a burner 62 facing a combustion chamber 50, called "wet chamber". The base of the wet chamber 50 is facing one side of the heat exchanger 2, while on an opposite side a condensate collecting basin 55 is provided. A hose 66 for discharging the flue gases emerges above the tubes 35 used for pre-heating the liquid as described above.

The flue gases generated by the combustion cross the thermal exchange elements 1 of the exchanger 2, if necessary condensing near the condensate collection basin 55. Subsequently they leave the boiler via the hose 66 after releasing part of the residual heat to the tubes 35 dedicated to pre-heating of the water.

The wet chamber 50 is defined by hollow walls inside which the liquid coming out of the exchanger 2 passes in order to further increase the thermal level before said liquid leaves the boiler 3.

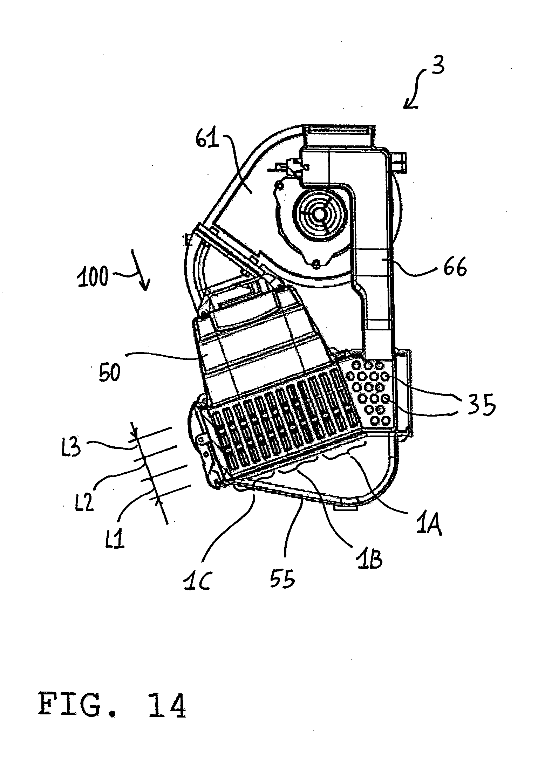

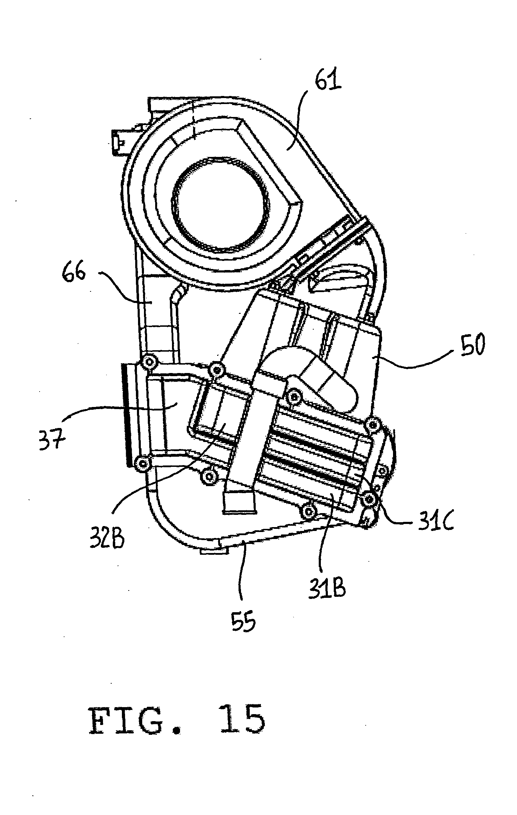

Figures 13, 14 and 15, if observed together, illustrate the path of the liquid inside the exchanger 2 defined by the configuration of the heads 21 and 22. The liquid is introduced into the flue gas heat recovery tubes 35 via the supply duct 41. The second head 22 comprises a relay chamber 37 which relays the liquid coming out of the tubes 35 inside a first set 1A of thermal exchange elements (see fig. 14) positioned at a first height L1 with respect to the direction of origin 100 of the flue gases. The liquid passes through the exchanger 2 in a first direction 105 until it reaches the first head 21 near which a first 31A of said second connection chambers sends the liquid towards circulation channels of a second set 1B of exchange elements arranged at the same first height L1. The liquid then runs in a second direction 110 opposite to the preceding one until it reaches the second head 22 from where it is sent back towards the first head 21, by means of a chamber 31B, inside a third series of exchange elements 1C. In this way all the channels of the elements 1 arranged at the first height L1 are crossed by the liquid. Near the first head 21, one 32A of said first connection chambers sends the liquid coming out of the third set of elements 1C to circulation channels belonging to the same elements, but positioned at a second height L2. The liquid is circulated according to the same principle in all the channels positioned at the second height L2 via further second connection chambers 31C and is then conveyed to circulation channels positioned at a third height L3 via a further first connection chamber 32B (see fig. 15). When all the circulation channels positioned at this last height L3 have been crossed, the liquid is transferred by means of the evacuation duct 42 to the wet chamber 50 to be further heated before reaching the utility.

This system of circulation of the liquid inside the exchanger results in high boiler efficiency as it makes best use of the energy content of the combustion products. In practice the configuration of the heads 21 and 22 of the exchanger 1 and the configuration of the boiler 3 are such as to create the conditions for maximum efficiency of each thermal exchange element 1.

The technical solutions adopted for the thermal exchange element and for the heat exchanger according to the invention therefore fully achieve the pre-set aims and objects. In particular the thermal exchange element according to the invention is easy to produce at limited cost and permits the construction of dependable high-efficiency heat exchangers. In practice, any materials and contingent dimensions and forms can be used according to requirements and the state of the art.

## Claims

1. Heat exchanger element (1) for heat exchangers (2) comprising a longitudinal sleeve (8) provided with an outer surface (8A) suitable for being skimmed by a heat carrier fluid, said sleeve (8) comprising an inner surface (8B) defining a cavity suitable for being crossed by a liquid to be heated, **characterised in that** it comprises a flow separator (10) positioned inside said sleeve (8) so as to define a plurality of circulation channels (5) inside said cavity, said flow separator (10) comprising a plurality of raised surfaces (11) arranged in contact with said inner surface (8B) of said sleeve (8) for the mechanical seal between two mutually adjacent channels.

2. Element (1) according to claim 1, **characterised in that** said inner surface (8B) of said sleeve (8) defines at least one wall of each of said channels (5).

3. Element (1) according to one or more of the claims 1 or 2, **characterised in that** said flow separator (10) comprises partition surfaces (12) between two mutually adjacent channels.

4. Element (1) according to claim 3, **characterised in that** said partition surfaces (12) consist of longitudinal regions of the same plate (15) delimited longitudinally by said raised surfaces (11).

5. Element (1) according to claim 4, **characterised in that** said plate (15) is made of metal, said raised surfaces (11) being made of rubber pressed longitudinally on said plate (15).

6. Element (1) according to one or more of the claims from 3 to 5, **characterised in that** said partition surfaces (12) comprise passages (13) to permit communication between adjacent channels (5B, 5C) suitable for being crossed by said liquid in a common direction.

7. Element (1) according to claim 6, **characterised in that** said partition walls (12) comprise turbulator elements (14) positioned near said passages (13) to generate turbulence of said liquid.

8. Element according to claim 1 or 2, **characterised in that** said flow separator (10) has a structure with central core (9) from which said raised surfaces (11) develop, said central core (9) having dimensions such that the working section for the passage of said liquid into said cavity is at least half of that measured without said flow separator (10).

9. Element (1) according to one or more of the claims from 1 to 7, **characterised in that** said sleeve (8) has a substantially rectangular cross section.

10. Element (1) according to claim 8, **characterised in that** said sleeve (8) has a substantially elliptical cross section.

11. Element (1) according to claim 10, **characterised in that** said flow separator (10) has a substantially elliptical cross section.

12. Element (1) according to claim 8, **characterised in that** said sleeve (8) has a substantially circular cross section.

13. Element (1) according to claim 12, **characterised in that** said flow separator (10) has a substantially circular cross section.

14. Heat exchanger (2) preferably for condensing boilers (3) **characterised in that** it comprises a first head (21) and a second head (22) between which a battery of thermal exchange elements (1) according to one or more of the claims from 1 to 13 is positioned, said first head (21) and said second head (22) comprising connection chambers (31A, 31B, 31C, 32A, 32B) arranged to connect said thermal exchange elements (1) so as to define a path for circulation of the liquid between said elements.

15. Heat exchanger according to claim 14, **characterised in that** each of said heads (21, 22) comprises a flange (25) for the anchoring of said exchange elements (1) at their ends.

16. Heat exchanger according to claim 15, **characterised in that** each of said heads (21, 22) comprises a cover (26) suitable for being connected hermetically to a respective flange (25), said cover (26) comprising a shaped surface cooperating with said flange (25) to define said connection chambers (31A, 31B, 31C, 32A, 32B).

17. Heat exchanger (2) according to claim 16, **characterised in that** at least one of said heads (21, 22) comprises a first connection chamber (32A, 32B) for the hydraulic connection of a first (5A) and a second channel (5B) belonging to the same exchanger element (1).

18. Heat exchanger (2) according to one or more of the claims from 14 to 17, **characterised in that** at least one of said heads (21, 22) comprises a second connection chamber (31A, 31B, 31C) for the hydraulic connection between one or more channels of a first heat exchanger element (1A) to one or more channels of a second exchanger element (1B).

19. Heat exchanger (2) according to one or more of the claims from 14 to 18, **characterised in that** each of said flanges (25) comprises an end portion (33) designed to permit the positioning of a plurality of tubes (35) suitable for pre-heating the liquid before the latter begins to circulate in the thermal exchange elements (1).

20. Heat exchanger (2) according to one or more of the claims from 14 to 19, **characterised in that** one of said heads (21) comprises a supply duct (41) for introduction of the liquid inside the exchanger (2).

21. Heat exchanger (2) according to claim 20, **characterised in that** one of said heads (21) comprises an outlet duct (41) for evacuation of the liquid from said exchanger (2).

22. Condensing boiler (3) **characterised in that** it comprises a heat exchanger (2) according to one or more of the claims from 14 to 21.
